# EUROPÄISCHE PATENTSCHRIFT

(11) **EP 1 087 875 B1**
(45) Veröffentlichungstag und Bekanntmachung des Hinweises auf die Patenterteilung: **03.04.2002**
(21) Anmeldenummer: 99923587.2
(22) Anmeldetag: 12.05.1999
(51) Int. Cl.: B60K 41/14

(54) **TRIEBSTRANGMANAGEMENT FÜR EIN KRAFTFAHRZEUG**
DRIVELINE MANAGEMENT FOR A MOTOR VEHICLE
GESTION DE LA CHAINE CINEMATIQUE D'UN VEHICULE A MOTEUR

(30) Priorität: 18.06.1998 DE 19827133
(43) Veröffentlichungstag der Anmeldung: 04.04.2001
(73) Patentinhaber: Volkswagen Aktiengesellschaft, 38436 Wolfsburg (DE)
(72) Erfinder: BOSSE, Rolf, D-38440 Wolfsburg (DE)
(74) Vertreter: Meyer, Enno, Dr.
(86) Internationale Anmeldenummer: EP9903285
(87) Internationale Veröffentlichungsnummer: WO9965722

(56) Entgegenhaltungen:
- EP-A- 0 352 110
- DE-A- 2 843 256
- DE-A- 2 934 270
- DE-A- 4 239 711
- US-A- 3 913 418
- US-A- 4 107 776
- US-A- 4 291 594

## Beschreibung

Die Erfindung betrifft ein Triebstrangmanagementverfahren für ein Kraftfahrzeug mit CVT-Getriebe, und insbesondere ein Triebstrangmanagementverfahren für den Online-Einsatz, sowie eine Vorrichtung zur Durchführung des Verfahrens.

Bei derzeitigen Kraftfahrzeugen findet eine getrennte und unabhängige Steuerung von Motor und Getriebe statt. Dabei wird motorseitig für den angesteuerten Betriebspunkt bei einer Leistungsanforderung des Fahrers in einem Kennfeld die entsprechenden Applikationsparameter ausgewählt und mittels eines Motorsteuergeräts eingestellt. Getriebeseitig wird bei einem Kraftfahrzeug mit einem stufenlos verstellbaren Getriebe (CVT-Getriebe) ein der angeforderten Leistung angepaßte Drehzahl eingestellt. Eine Rückkopplung zwischen Motor und Getriebe zur wechselseitigen Optimierung bezüglich von Gütegrößen wie beispielsweise Emission, Verbrauch, Komfort, Partikelemission, Akustik etc. findet nicht statt. Ferner ist es nicht möglich die Motor- bzw. Getriebeapplikation während der Fahrt bzw. des Betriebs des Kraftfahrzeugs zu ändern.

US-A-4 291 594 beschreibt ein Verfahren zum On Line management eines Triebstranges eines Kraftfuhrzeuges mit einem CVT-Getriebe entsprechend dem Oberbegriff von Anspruch 1.

Der Erfindung liegt daher die Aufgabe zugrunde, ein dynamisches Verfahren zum Triebstrangmanagement sowie eine entsprechende Triebstrangmanagementeinheit zu schaffen.

Die Aufgabe wird durch die Merkmale der Ansprüche 1 und 9 gelöst. Bevorzugte Ausgestaltungen der Erfindung sind Gegenstand der Unteransprüche.

Bevorzugte Ausführungsformen sowie Details der Erfindung werden nachfolgend anhand der Zeichnungen erläutert.
- Fig. 1: zeigt eine Schemadarstellung des Verfahrens zur Ermittlung einer optimalen Getriebekennlinie,
- Fig. 2: zeigt ein Beispiel einer Getriebekennlinie in einem Gütekennfeld, und
- Fig. 3: zeigt den funktionalen Aufbau einer Vorrichtung zur Durchführung des Triebstrangmanagements.

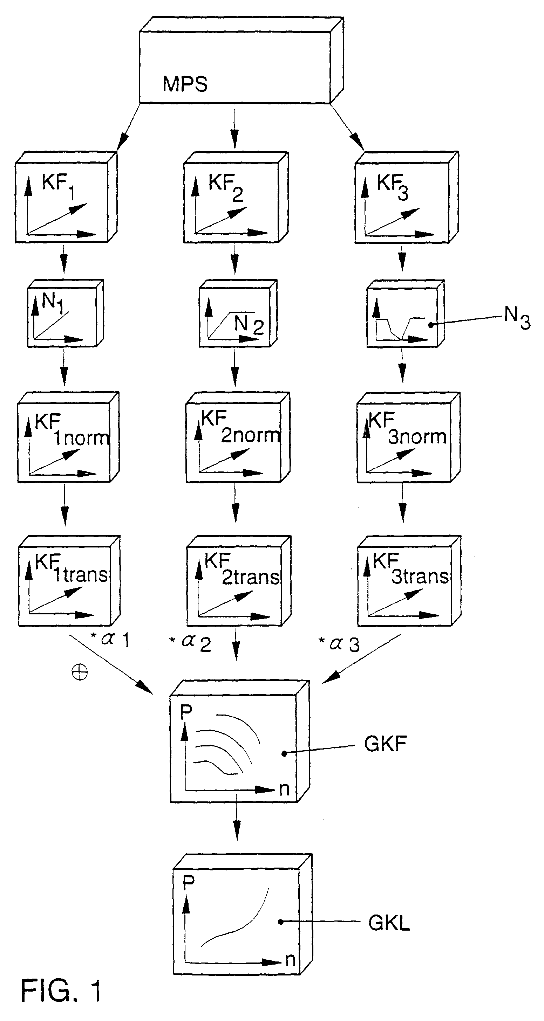

Fig. 1 zeigt eine schematische Darstellung des Verfahrens zur Online-Ermittlung einer optimalen Getriebekennlinie aus vorgegebenen Kennfeldern. Auf einem Motorprüfstand MPS werden Kennfelder KF₁, KF₂, ... KFₙ ermittelt, die sozusagen als Basiskennfelder dienen können. Dabei ist ein Kennfeld definiert als eine Darstellung einer bestimmten Gütegröße als Funktion des Drehmoments und der Drehzahl, also beispielsweise könnte KF₁ ein Kennfeld bezüglich der NOx-Emission, KF₂ ein Kennfeld bezüglich der Rußzahl oder Partikelemission und KFₙ eine Kennfeld hinsichtlich der Verbrauch sein. Es sind auch andere Zuordnungen denkbar, beispielsweise könnte KF₁ die NOx-Emission eines neuen Motors, KF₂ die NOx-Emission eines eingefahrenen Motors (z. B. mit 10.000 km Laufleistung) und KFₙ die NOx-Kennlinie eines alten Motors (z. B. 100.000 KM Laufleistung) sein. Ferner ist das Verfahren hier nur beispielhaft für 3 Kennfelder erläutert. Die Anzahl der verwendeten Kennfelder n ist eine natürliche Zahl größer oder gleich Eins. Die Kennfelder KF₁, KF₂, ... KFₙ werden anschließend normiert, d. h. mittels Normierungsfunktionen N₁, N₂ und ... Nₙ in normierte Kennfelder KF₁ₙₒᵣₘ, KF₂ₙₒᵣₘ und ... KFₙₙₒᵣₘ abgebildet. Die Normierungsfunktion muß nicht linear sein, sondern kann beispielsweise auch eine e-Funktion sein. Im allgemeinen ist der Bereich der normierten Gütegröße ein Wert zwischen 0 und 255, wobei vereinbart ist, daß kleine Werte "gute" Werte sind, während große Werte "schlechte" Werte sind. Diese Vereinbarung könnte ebensogut invertiert sein. Mit anderen Worten, es wird zur Beschreibung des Werts der Gütegröße ein Byte verwendet, was im allgemeinen ausreichend ist. Wird eine höhere Genauigkeit benötigt, so wird ein entsprechend größerer Bereich verwendet, beispielsweise 2 Byte. Der Sinn der Normierung der Kennfelder besteht darin, die Funktionswerte der Gütegrößen miteinander vergleichbar zu machen. Anschließend werden die normierten Kennfelder von der Darstellung Drehzahl gegenüber Drehmoment in eine Darstellung Drehzahl gegenüber Leistung transformiert. Es ist offensichtlich, daß die Reihenfolge der Schritte Normierung und Transformation miteinander vertauschbar ist. Die transformierten und normierten Kennfelder werden dann in dem nächsten Schritt zu einem gemeinsamen Gütekennfeld verknüpft. Eine Möglichkeit der Verknüpfung ist die Addition der drei Kennfelder, die mit Gewichtsfaktoren α₁, α₂, ... αₙ multipliziert sind. In dem so ermittelten Gütekennfeld GKF kann mit einem geeigneten Verfahren ein optimaler Weg durch das Gütekennfeld bestimmt werden. Ein geeignetes Verfahren ist beispielsweise die Ermittlung des Weges mit geringen Werten, d. h. die Summe der Einzelwerte soll möglichst klein sein, bei stetig steigender Leistung und Drehzahl.

Die Berechnung kann online während des Betriebs des Fahrzeugs durchgeführt werden, wobei eine Strategie durch eine geeignete Wahl der Gewichtsfaktoren α₁, α₂, ... αₙ und/oder der Normierungsfunktion N₁, N₂, ... Nₙ vorgegeben werden kann.

Ferner ist es möglich, daß einzelne Werte der in das Verfahren einfließenden Kennfelder während des Betriebs des Fahrzeugs durch geeignete Sensoren gemessen werden, so daß das Verfahren mit entsprechend abgeänderten Kennfelder KF₁, KF₂ und ... KFₙ beginnen würde. Mit anderen Worten, das Verfahren beginnt mit auf dem Prüfstand ermittelten Basiskennfeldern, die während des Betriebs des Fahrzeugs durch die Messung geeigneter Kennfeldpunkte aktualisiert werden, so daß sich quasi immer eine aktuelle optimale Getriebekennlinie unter Vorgabe einer gewünschten Strategie online während des Betriebs des Fahrzeugs ermitteln läßt.

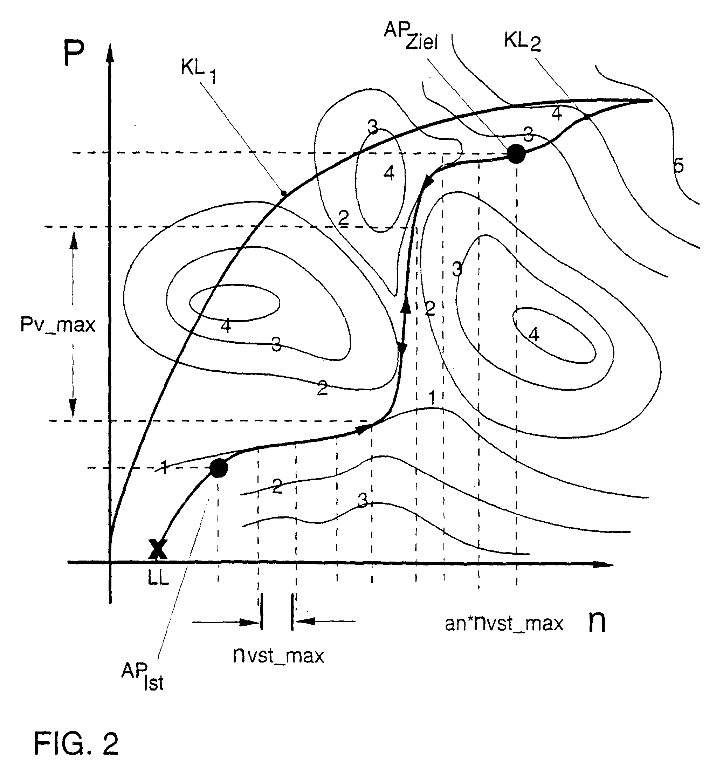

Fig. 2 zeigt ein Beispiel eines optimalen Wegs durch ein Gütekennfeld, das mit dem in Fig. 1 erläuterten Verfahren erzeugt wird, wobei es natürlich auch möglich ist, ein Gütekennfeld aus einem einzigen Kennfeld zu erzeugen. Dargestellt in Draufsicht sind Höhenlinien einer Gütegröße, beispielsweise der NOx-Emission, wobei größere Werte eine höhere Emission darstellen, d. h. "schlecht", sind. Die durchgezogenen obere Linie KL₁ stellt beispielhaft eine fiktive Getriebekennlinie, bei der zur Erzeugung einer höheren Leistung die Drehzahl n entsprechend erhöht wird. Dabei verläuft die fiktive Getriebekennlinie KL₁ so, daß sie möglichst sämtliche Emissionsmaximas berührt, d. h. daß mit dieser Getriebekennlinie ein schlechtes Emissionsverhalten bewirkt wird. Demgegenüber vermeidet die "optimale" Getriebekennlinie KL₂ gerade Bereiche hoher Emission, d. h. großer Werte des Gütekennfeldes, so daß ein wesentlich besseres Emissionsverhalten erzielt wird.

Eine Berechnung des optimalen Wegs durch das Gütekennfeld kann nach dem nachfolgenden Verfahren durchgeführt werden, wobei vorausgesetzt wird, daß die Motorreaktionszeit schneller als die Reaktionszeit des Getriebes ist. Unter Reaktionszeit wird dabei die Zeit verstanden, die ein Aggregat braucht bis ein neuer Arbeitspunkt eingestellt ist. Im Fall eines Getriebes ist es die Zeit, die zur Einstellung einer neuen Übersetzung benötigt wird, und im Fall eines Motors ist es die Zeit, die zur Einstellung eines neuen Drehmoments benötigt wird.

Es wird ein Zeittakt Tₓ definiert, der durch die maximale Programmlaufzeit des Zielpunktberechnungsprozesses gegeben ist. Durch einen Fahrversuch wird einmalig die maximale Leistungsverstellmöglichkeit (P_{vst_max}) des Motors pro Zeittakt Tₓ ermittelt. Außerdem wird einmalig ebenfalls in einem Fahrversuch die maximale Verstellmöglichkeit des Getriebes (n_{vst_max}) pro Zeittakt Tₓ ermittelt.

Der Weg durch das Gütekennfeld vom Ist-Wert APᵢₛₜ zum Zielwert AP_{ziel} wird in aₙ Drehzahlschritte unterteilt. Mit LL wird der Leerlaufwert bezeichnet. Die Anzahl aₙ der Drehzahlschritte ergibt aus dem Abstand zwischen dem Ist-Wert APᵢₛₜ und dem stationären Zielwert AP_{ziel} und der maximalen Getriebeverstellmöglichkeit n_{vst_max}. Nun ist eine Möglichkeit der Anpassung des Leistungsänderungsverhaltens gegeben, indem man entsprechend einer einstellbaren Strategie des Fahr- bzw. des Komfortverhaltens beispielsweise den Weg geringster Änderungen der Gütegröße mittels eines geeigneten Optimierungsverfahrens berechnet. Die maximale Leistungsverstellmöglichkeit P_{vst_max} setzt Randbedingungen. Ist im i-ten Schritt die Leistungsänderung P_{vst_i} größer als die maximale Leistungsverstellmöglichkeit P_{vst_max} so wird das Getriebeverstellintervall nᵥₛₜ solange verkleinert, bis die neue i-te Leistungsverstellmöglichkeit P_{vst_i_neu} gleich der maximalen Leistungsverstellmöglichkeit P_{vst_max} ist. Ist jedoch die Leistungsverstellmöglichkeit des i-ten Intervalls P_{vst_i} kleiner als die maximale Leistungsverstellmöglichkeit, so wird das Getriebeverstellintervall n_{vst_i} gleich dem maximalen Intervall n_{vst_max} eingestellt. Die Nummer i des betrachteten Intervalls ist eine natürliche Zahl kleiner oder gleich der Zahl aₙ der Drehzahlschritte.

Zur Berechnung des optimalen Wegs durch ein Gütekennfeld können natürlich unterschiedliche Gütekennfelder für verschiedene Motor- und/oder Fahrzustände zum Einsatz kommen, beispielsweise ein Gütekennfeld, das einen kalten Motor beschreibt oder ein Gütekennfeld, das einen Motor mit Betriebstemperatur beschreibt.

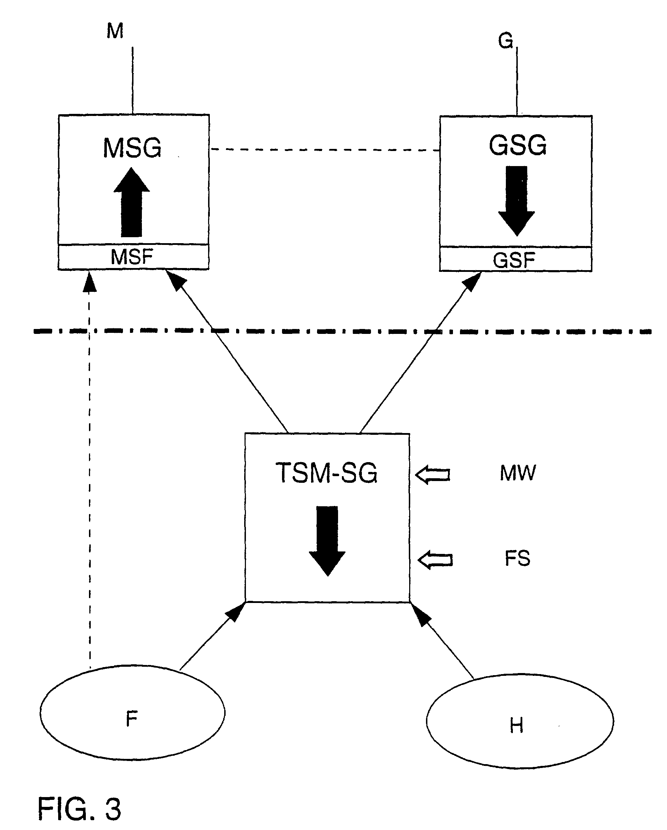

Fig. 3 beschreibt den funktionalen Aufbau einer Vorrichtung zur Durchführung des Triebstrangmanagements. Das Vorrichtung umfaßt drei Steuereinheiten, nämlich das Triebstrangmanagement-Steuergerät TSM-SG, das Motor-Steuergerät MSG und das Getriebe-Steuergerät GSG. In das Triebstrangmanagement-Steuergerät TSM-SG fließt einerseits ein Fahrerwunsch F und ein Herstellerwunsch H ein. Der Fahrerwunsch F kann eine Leistungsanforderung durch eine entsprechende Stellung des Pedalwertgebers (Gaspedal) sein. Der Herstellerwunsch H beinhaltete eine Strategie hinsichtlich beispielsweise Abgas, Verbrauch, Komfort etc. Ferner werden in das Triebstrangmanagement-Steuergerät TSM-SG Meßwerte MW von Sensoren zur Ergänzung beispielsweise der Kennfelder und die Strategie FS des Fahrers eingegeben. Das Triebstrangmanagement-Steuergerät TSM-SG errechnet den optimalen Wert durch ein entsprechendes Gütekennfeld bei einer Leistungsanforderung des Fahrers und gibt die entsprechenden Stellgrößen, d. h. Einspritzmenge M_E und Drehzahl n, an das Motorsteuergerät MSG bzw. das Getriebesteuergerät GSG ab. In den Motor- und Getriebesteuergeräten MSG, GSG wird dann die entsprechenden Regelparameter an den Motor M bzw. das Getriebe G abgegeben. Bei dem Getriebe G handelt es sich um ein kontinuierlich verstellbares Getriebe (CVT-Getriebe). Zwischen dem Motorsteuergerät und dem Getriebesteuergerät findet ein Informationsaustausch I als Sicherheitsfunktion statt. Ferner ist im Motorsteuergerät MSG ebenfalls eine Sicherheitsfunktion MSF realisiert, beispielsweise die Kick-down-Funktion des Pedalwertgebers (Gaspedal), die direkt vom Fahrerwunsch umsetzbar ist (siehe gestrichelte Linie). Im Getriebesteuergerät GSG ist ebenfalls eine Sicherheitsfunktion GSF in Form einer Reservestrategie implementiert.

Die Funktionalität der TSM-SG's kann auch in Motorsteuergerät oder Getriebesteuergerät untergebracht werden.

### BEZUGSZEICHENLISTE

- AP_{Ist}: Ist-Punkt
- AP_{Ziel}: Zielpunkt
- F: Fahrerwunsch
- FS: Fahrerstrategie
- G: Getriebe
- GSF: Getriebesicherheitsfunktion
- GSG: Getriebesteuergerät
- H: Herstellerwunsch
- KL₁: Kennlinie
- KL₂: Kennlinie
- LL: Leerlauf
- M: Motor
- MSF: Motorsicherheitsfunktion
- MSG: Motorsteuergerät
- MW: Meßwerte
- n: Drehzahl
- P: Leistung
- TSM-SG: Triebstrangmanagement-Steuergerät

## Patentansprüche

1. Verfahren zum Onlinemanagement eines Triebstranges eines Kraftfahrzeuges mit einem CVT-Getriebe, wobei in einem Gütekennfeld (GKF), in dem eine Gütegröße als Funktion der Leistung (P) und der Drehzahl (n) aufgetragen ist, zur Einstellung der Drehzahl (n) bei einer angeforderten Leistung (P) ein optimaler Weg durch das Gütekennfeld (GKF) bezüglich vorgegebener Optimierungskriterien berechnet wird, **dadurch gekennzeichnet, daß** das Gütekennfeld (GFK) durch eine Zusammenfassung mehrerer Kennfelder (KF₁, KF₂, ... KFₙ) berechnet wird, wobei jedes Kennfeld eine zu optimierende Gütegröße beschreibt und jedes Kennfeld mit einer Gewichtsfunktion (α₁, α₂, ... αₙ) multipliziert wird, und während des Betriebs des Kraftfahrzeugs die vorgegebenen Optimierungskriterien ausgewählt werden sowie die Berechnungen erfolgen.

2. Verfahren nach Anspruch 1, **dadurch gekennzeichnet, daß** die Kennfelder normierte Kennfelder (KF_{1_norm}, KF_{2_norm}, ... KF_{n_norm}) sind, wobei jedes Kennfeld eine eigene Normierungsfunktion (N₁, N₂, ... Nₙ) beinhaltet.

3. Verfahren nach Anspruch 1 oder 2, **dadurch gekennzeichnet, daß** die Gewichtsfunktion (α₁, α₃, ... αₙ) zeitabhängig ist.

4. Verfahren nach einem der Ansprüche 1 - 3, **dadurch gekennzeichnet, daß** ein Gütekennfeld aus Kennfeldern der gleichen Gütegröße berechnet wird.

5. Verfahren nach einem der Ansprüche 1 - 3, **dadurch gekennzeichnet, daß** ein Gütekennfeld aus Kennfeldern verschiedener Gütegrößen berechnet wird.

6. Verfahren nach einem der vorangegangenen Ansprüche, **dadurch gekennzeichnet, daß** einzelne oder mehrere der Kennfelder (KF₁, KF₂, ... KFₙ) durch Messung einzelner Gütegrößen im Fahrbetrieb ergänzt werden.

7. Verfahren nach einem der vorangegangenen Ansprüche, **dadurch gekennzeichnet, daß** die Optimierung bezüglich des Verbrauchs, der Emission, insbesondere der NOx-Emission und/oder der Partikelemission und/oder des Komforts durchgeführt wird.

8. Verfahren nach einem der vorangegangenen Ansprüche, **dadurch gekennzeichnet, daß** durch einen Fahrversuch die maximal mögliche Verstellmöglichkeit der Leistung (P_{vst_max}) pro vorgegebenen Zeittakt (Tₓ) und die maximal mögliche Getriebeverstellmöglichkeit (n_{vst_max}) pro Zeittakt (Tₓ) ermittelt wird.

9. Vorrichtung zur Durchführung des Verfahrens nach einem der Ansprüche 1 bis 8, **dadurch gekennzeichnet, daß** Vorrichtung ein Steuergerät (MSG) für den Verbrennungsmotor (M), ein Steuergerät (GSG) für das CVT-Getriebe (G) und ein Steuergerät (TSM-SG) für das Triebstrangmanagement aufweist, wobei die Steuergeräte (MSG, GSG, TSM-SG) miteinander verbunden sind.

10. Vorrichtung nach Anspruch 9, **dadurch gekennzeichnet, daß** das Triebstrangsteuergerät (TSM-SG) zur Ansteuerung des Arbeitspunktes des Triebstrangs die Stellgröße Einspritzmenge (M_E) oder Drehmoment an das Motorsteuergerät (MSG) und die Stellgröße Drehzahl (n) oder die Übersetzung (Ü) an das Getriebesteuergerät (GSG) abgibt.

11. Vorrichtung nach einem der Ansprüche 9 oder 10, **dadurch gekennzeichnet, daß** die Steuergeräte (MSG, GSG, TSM-SG) über einen Bus miteinander verbunden sind.

12. Vorrichtung nach Anspruch 11, **dadurch gekennzeichnet, daß** der Bus durch eine CAN-Bus gebildet wird.

## Claims

1. Method for the online management of a driveline of a motor vehicle with a continuously variable transmission, wherein in a quality characteristics map (GKF), in which a quality variable is entered as a function of output (P) and engine speed (n), in order to adjust the engine speed (n) in the case of a required output (P) an optimal path is calculated by means of the quality characteristics map (GKF) in relation to defined optimization criteria, **characterised in that** the quality characteristics map (GKF) is calculated by combination of a plurality of characteristics maps (KF₁, KF₂, ... KFₙ), wherein each characteristics map describes a quality variable to be optimised and each characteristics map is multiplied by a weighting function (α₁, α₂, ... αₙ), and during operation of the motor vehicle the defined optimization criteria are selected and the calculations are carried out.

2. Method according to claim 1, **characterised in that** the characteristics maps are normalised characteristics maps (KF_{1_norm}, KF_{2_norm}, ... KF_{n_norm}), wherein each characteristics map contains an individual normalising function (N₁, N₂, ... Nₙ).

3. Method according to claim 1 or 2, **characterised in that** the weighting function (α₁, α₂, ... αₙ) is time-dependent.

4. Method according to any one of claims 1 - 3, **characterised in that** a quality characteristics map is calculated from characteristics maps of the same quality variable.

5. Method according to any one of claims 1 - 3, **characterised in that** a quality characteristics map is calculated from characteristics maps of different quality variables.

6. Method according to any one of the preceding claims, **characterised in that** single or several of the characteristics maps (KF₁, KF₂, ... KFₙ) can be supplemented by measuring individual quality variables in travel operation.

7. Method according to any one of the preceding claims, **characterised in that** the optimisation is carried out with respect to consumption, emission, particularly NOₓ emission and/or particle emission and/or comfort.

8. Method according to any one of the preceding claims, **characterised in that** by means of a travel trial the maximum possible adjustment capability of the output (P_{vst_max}) per defined time pulse (Tₓ) and the maximum possible transmission adjustment capability (n_{vst_max}) per time pulse (Tₓ) are determined.

9. Apparatus for carrying out the method according to any one of claims 1 to 8, **characterised in that** the apparatus has a control device (MSG) for the internal combustion engine (M), a control device (GSG) for the CVT (G) and a control device (TSM-SG) for the driveline management, wherein the control devices (MSG, GSG, TSM-SG) are connected to each other.

10. Apparatus according to claim 9, **characterised in that** the driveline control device (TSM-SG) for controlling the operating point of the driveline supplies the adjusting variable injection quantity (M_E) or torque to the engine control device (MSG) and supplies the adjusting variable engine speed (n) or the transmission (Ü) to the transmission control device (GS).

11. Apparatus according to one of claims 9 or 10, **characterised in that** the control devices (MSG, GSG, TSM-SG) are connected to each other via a bus.

12. Apparatus according to claim 11, **characterised in that** the bus is formed by a CAN bus.

## Revendications

1. Procédé pour le pilotage direct d'un mécanisme de transmission d'un véhicule automobile comportant une transmission CVT, dans lequel on calcule dans un diagramme caractéristique de qualité (GKF) dans lequel une grandeur de qualité est enregistrée en fonction de la puissance (P) et de la vitesse de rotation (n), pour le réglage de la vitesse de rotation (n) pour une puissance (P) demandée, un trajet optimal à travers le diagramme caractéristique de qualité (GKF) par rapport à des critères d'optimisation prédéterminés, **caractérisé en ce qu**'on calcule le diagramme caractéristique de qualité (GFK) en regroupant plusieurs diagrammes caractéristiques (KF₁, KF₂, ..., KFₙ), chaque diagramme caractéristique décrivant une grandeur de qualité à optimiser et chaque diagramme caractéristique étant multiplié par une fonction de pondération (α₁, α₂, ..., αₙ), et en ce que, pendant le fonctionnement du véhicule automobile, on sélectionne les critères d'optimisation prédéterminés et on effectue les calculs.

2. Procédé selon la revendication 1, **caractérisé en ce que** les diagrammes caractéristiques sont des diagrammes caractéristiques normés (KF_{1_norm}, KF_{2_norm}, ..., KF_{n_norm}), chaque diagramme caractéristique contenant une fonction de calcul de norme (N₁, N₂, ..., Nₙ) particulière.

3. Procédé selon la revendication 1 ou 2, **caractérisé en ce que** la fonction de pondération (α₁ α₂, ..., αₙ) est dépendante du temps.

4. Procédé selon l'une quelconque des revendications 1 à 3, **caractérisé en ce qu'**on calcule un diagramme caractéristique de qualité à partir de diagrammes caractéristiques de la même grandeur de qualité.

5. Procédé selon l'une quelconque des revendications 1 à 3, **caractérisé en ce qu'**on calcule un diagramme caractéristique de qualité à partir de diagrammes caractéristiques de différentes grandeurs de qualité.

6. Procédé selon l'une quelconque des revendications précédentes, **caractérisé en ce qu**'on complète des diagrammes caractéristiques individuels ou plusieurs diagrammes caractéristiques (KF₁, KF₂, ..., KFₙ) en mesurant des grandeurs de qualité individuelles lorsque le véhicule automobile est en train de rouler.

7. Procédé selon l'une quelconque des revendications précédentes, **caractérisé en ce qu'**on effectue l'optimisation par rapport à la consommation, aux émissions, notamment à l'émission de NOx et/ou à l'émission de particules, et/ou au confort.

8. Procédé selon l'une quelconque des revendications précédentes, **caractérisé en ce qu'**on détermine via un essai de conduite la possibilité de réglage maximale de la puissance (P_{vst_max}) par unité temporelle prédéterminée (Tₓ) et la possibilité de réglage de transmission maximale (n_{vst_max}) par unité temporelle (Tₓ).

9. Dispositif pour la mise en oeuvre du procédé selon l'une des revendications 1 à 8, **caractérisé en ce que** le dispositif comporte un appareil de commande (MSG) pour le moteur à combustion interne (M), un appareil de commande (GSG) pour la transmission CVT (G) et un appareil de commande (TSM-SG) pour le pilotage d'un mécanisme de transmission, les appareils de commande (MSG, GSG, TSM-SG) étant reliés entre eux.

10. Dispositif selon la revendication 9, **caractérisé en ce que** l'appareil de commande de mécanisme de transmission (TSM-SG), pour la commande du point de fonctionnement dynamique du mécanisme de transmission, fournit la grandeur réglante quantité d'injection (M_E) ou couple à l'appareil de commande de moteur (MSG) et la grandeur réglante vitesse de rotation (n) ou le rapport de transmission (Ü) à l'appareil de commande de transmission (GSG).

11. Dispositif selon l'une quelconque des revendications 9 ou 10, **caractérisé en ce que** les appareils de commande (MSG, GSG, TSM-SG) sont reliés entre eux par l'intermédiaire d'un bus.

12. Dispositif selon la revendication 11, **caractérisé en ce que** le bus est formé par un bus CAN.
